# EUROPÄISCHE PATENTSCHRIFT

(11) **EP 0 432 602 B1**
(45) Veröffentlichungstag und Bekanntmachung des Hinweises auf die Patenterteilung: **27.07.1994**
(21) Anmeldenummer: 90123064.9
(22) Anmeldetag: 01.12.1990
(51) Int. Cl.: H02M 3/335

(54) **Gleichspannungswandler, insbesonder vom Typ eines Quasi-Resonanzwandlers**
DC-DC converter, in particular of the quasi-resonant type
Convertisseur continu-continu, en particulier du type quasi-résonant

(30) Priorität: 15.12.1989 DE 3941421
(43) Veröffentlichungstag der Anmeldung: 19.06.1991
(73) Patentinhaber: ANT Nachrichtentechnik GmbH, D-71522 Backnang (DE)
(72) Erfinder: Grünsch, Eckhardt, W-7173 Mainhardt (DE)

(56) Entgegenhaltungen:
- EP-A- 0 330 987
- DE-A- 2 635 089
- DE-A- 3 741 222

## Beschreibung

Die Erfindung betrifft einen Gleichspannungswandler gemäß dem Oberbegriff des Patentanspruchs 1.

Gleichspannungswandler vom Zerhackerprinzip werden zur Erhöhung der Arbeitsfrequenz mit induktiven und kapazitiven Elementen beschaltet, um das Stellglied im Nulldurchgang verlustfrei schalten zu können (IEEE Power Electronics Specialists Conference, Université Paul Sabatier, Toulouse, France, 1985, Seiten 106 bis 116).

Aus der EP 0 330 987 A1 ist es bekannt, einen Quasi-Resonanzwandler in Abhängigkeit der Differenz zwischen der Ausgangsspannung und einer Referenzspannung zu regeln. Aus der DE 37 41 222 C1 ist es bei einem Sperrwandler bekannt, die Primärwicklung eines Stromwandlers in Serie zum ausgangsseitigen Glättungskondensator zu schalten für die Gewinnung eines laststromproportionalen Signals.

Aufgabe vorliegender Erfindung ist es, ausgehend vom Oberbegriff des Patentanspruchs 1 einen Gleichspannungswandler anzugeben, der ein zum Laststrom direkt proportionales Signal liefert. Diese Aufgabe wird durch die Merkmale des Patentanspruchs 1 gelöst. Die Unteransprüche zeigen vorteilhafte Aus-/Weiterbildungen auf.

Der Gleichspannungswandler nach der Erfindung liefert ein fehlerfreies laststromproportionales Signal bei einem Quasi-Resonanzwandler. Die Auswertung ist sehr einfach; lediglich ein Stromwandler ist notwendig. Zum Auswerten wird keine Hilfsspannung benötigt oder sonstiger zusätzlicher Schaltungsaufwand. Der Stromwandler wird nur mit Wechselsignalen beaufschlagt und kann daher aus einem Ringkernübertrager kleiner Bauform bestehen. Die durch die Auswertung auftretende Verlustleistung ist sehr gering.

Anhand der Zeichnungen wird die Erfindung nun näher erläutert. Es zeigen
- Figur 1: ein Prinzipschaltbild eines Gleichspannungswandlers nach der Erfindung,
- Figur 2: ein Prinzipschaltbild eines Gleichspannungswandlers nach der Erfindung mit verbessertem dynamischen Verhalten,
- Figur 3 bis Figur 12: ausgewählte Oszillogramme von Strom- und Spannungsverläufen beim Gleichspannungswandler gemäß Figur 2.

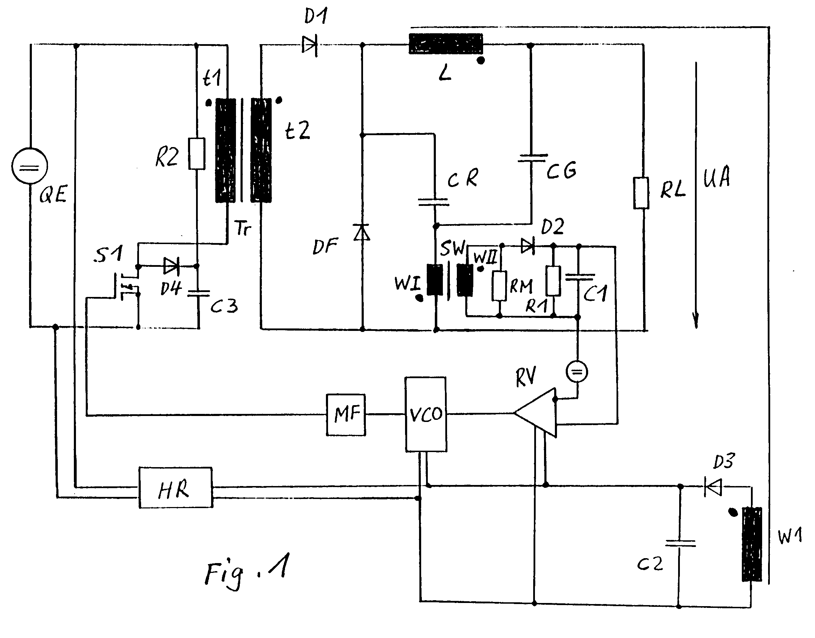

Der in Figur 1 dargestellte Quasi-Resonanzwandler arbeitet nach dem Flußwandlerprinzip mit galvanischer Trennung zwischen Gleichspannungsversorgungskreis und Gleichspannungs-Lastkreis. Die Gleichspannungsquelle QE ist über das Schaltregler-Stellglied S1 mit der Primärwicklung t1 des Transformators Tr verbunden. Die Sekundärwicklung t2 des Transformators Tr ist über die Serienschaltung aus Gleichrichter D1 und Glättungsdrossel L mit dem ausgangsseitigen Glättungskondensator CG, und der Last RL verbunden. Die beim Flußwandler übliche Freilaufdiode ist mit DF bezeichnet. Parallel zur Freilaufdiode DF ist die Serienschaltung, bestehend aus dem resonanzbestimmenden kapazitiven Element - Kondensator CR - und der Primärwicklung WI des Stromwandlers SW, angeordnet. Der ausgangsseitige Glättungskondensator CG ist ebenfalls zur Primärwicklung WI des Stromwandlers SW geführt und zwar mit jenem seiner Anschlußenden, das nicht unmittelbar an die Glättungsdrossel L angeschlossen ist. Das induktive resonanzbestimmende Element des Quasi-Resonanzwandlers kann beispielsweise die Streuinduktivität des Transformators Tr sein oder ein zusätzlich angeordnetes induktives Element, wie dies aus zahlreichen Veröffentlichungen, z.B. "IEEE Power Electronics Specialists Conference" s.o. oder "High Frequency Power Conversion Conference Proceedings", Mai 1986, Seiten 241 bis 250 bekannt ist.

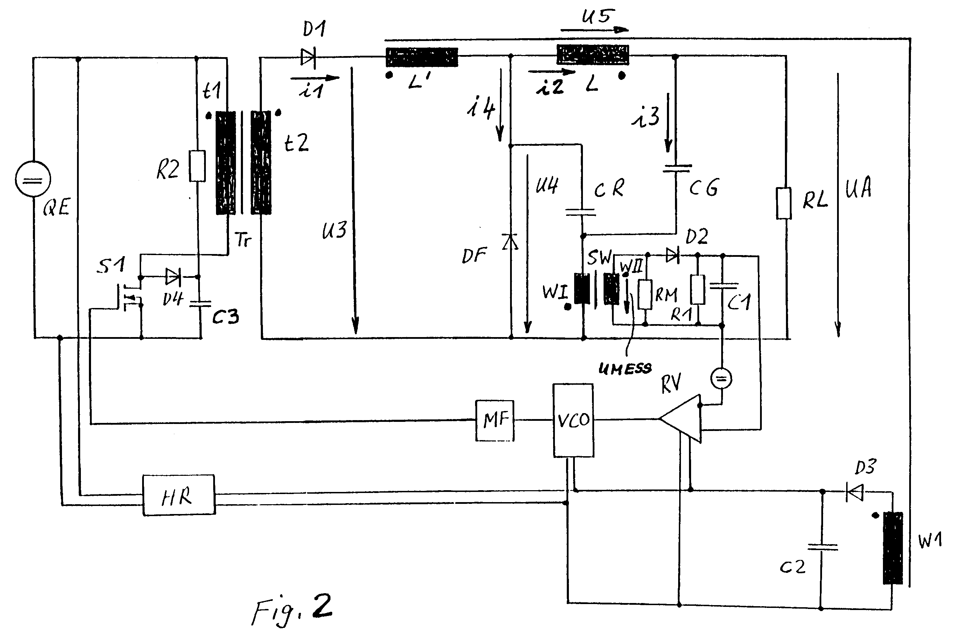

Besonders vorteilhaft ist es das induktive resonanzbestimmende Element des Quasi-Resonanzwandlers erfindungsgemäß als Teil der Glättungsdrossel L auszubilden oder als ein mit der Glättungsdrossel magnetisch gekoppeltes zusätzliches induktives Element L' vorzusehen (Figur 2). Wie in Figur 2 dargestellt, liegt das induktive Element L', zwischen dem Gleichrichter D1 und dem Verbindungspunkt der Kathode der Freilaufdiode DF mit der Glättungsdrossel L. Der Wicklungssinn der Wicklung auf dem Element L' ist bezüglich des Wicklungssinns der Wicklung auf der Glättungsdrossel L - in Figur 2 durch einen Punkt markiert - derart, daß während der Energieübertragung des Gleichspannungswandlers - das Schaltregler-Stellglied S1 ist dann geschlossen - ein Teil des Resonanzstromes zum Ausgang des Gleichspannungswandlers, beziehungsweise in dessen ausgangsseitigen Glättungskondensator CG fließen kann. Die Glättungsdrossel L arbeitet zusammen mit dem induktiven Element L' als Stromwandler. Die Induktivität des Elements L' bestimmt in Verbindung mit dem Kondensator CR im wesentlichen die Resonanzfrequenz der Stromhalbwelle. Die Streuinduktivität des Stromwandlers SW ist dabei vernachlässigbar. Das Verhältnis der Windungszahl der Wicklung auf der Glättungsdrossel L zur Windungszahl der Wicklung auf dem zusätzlichen induktiven Element L', wird größer als 1, z.B. 4, gewählt. Dieses Verhältnis wird entsprechend der Anwendung bezüglich des Wirkungsgrades und den dynamischen Eigenschaften optimiert.

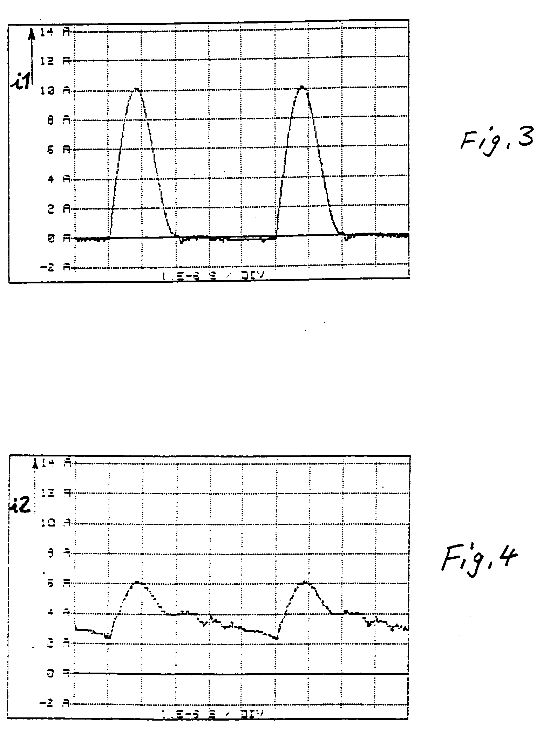

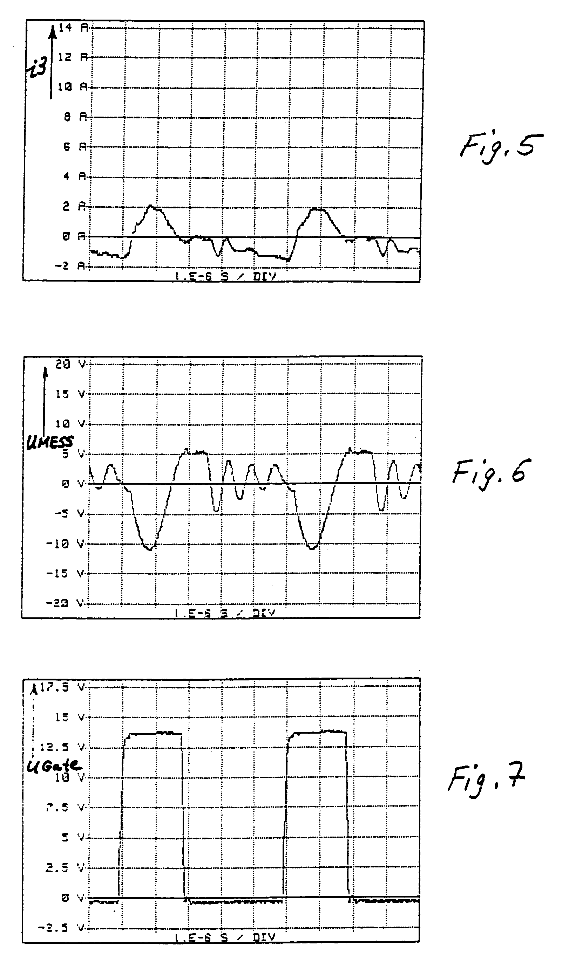

Der Verlauf der Stromhalbwelle, Strom il über den Gleichrichter D1 und das Element L', ist in Figur 3 dargestellt. Ein Zeitachsenteilstrich entspricht in den Figuren 2 bis 12 einer Mikrosekunde (1E-6S/DIV). Der Verlauf des Laststroms i2, der über die Glättungsdrossel L fließt, ist in Figur 4 dargestellt. Für eine realisierte Schaltung betrug der Mittelwert dieses Laststroms i2 = 4A. Der über den Glättungskondensator CG fließende Strom i3 ist in Figur 5 dargestellt. Es ist ein reiner Wechselstrom.

Der Stromwandler SW kann als Ringkernübertrager ausgebildet werden. In diesem Falle kann die Primärwicklung WI einfach dadurch realisiert werden, daß die gemeinsame Zuleitung der Kondensatoren CR und CG zu der nicht unmittelbar mit der Glättungsdrossel L verbundenen Lastklemme durch das Restloch des Ringkerns gesteckt wird. Der Strom i3 erzeugt an der Sekundärwicklung WII des Stromwandlers SW einen Spannungsabfall UMESS (Figur 6) der mit dem Strommeßwiderstand RM erfaßt wird. Die Wechselspannung am Strommeßwiderstand RM wird so gleichgerichtet, daß das dem Laststrom proportionale Spannungsplateau spitzenwertintegriert wird (Gleichrichter D2, Widerstand R1, Kondensator C1).

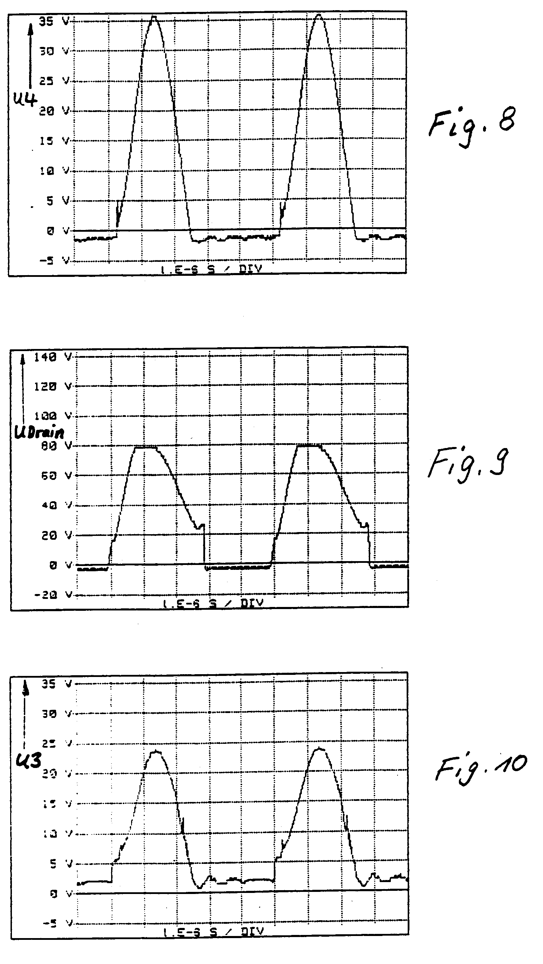

Wenn das Schaltregler-Stellglied S1, das hier als Feldeffekttansistor ausgebildet ist, geöffnet wird (U Gate = OV, vgl. Figur 7), entlädt sich zuerst der Kondensator CR über die Glättungsdrossel L. Nach der Entladung des Kondensators CR fließt der Laststrom weiter über die Freilaufdiode DF. Die Spannung U4 an der Freilaufdiode DF ist in Figur 8 dargestellt.

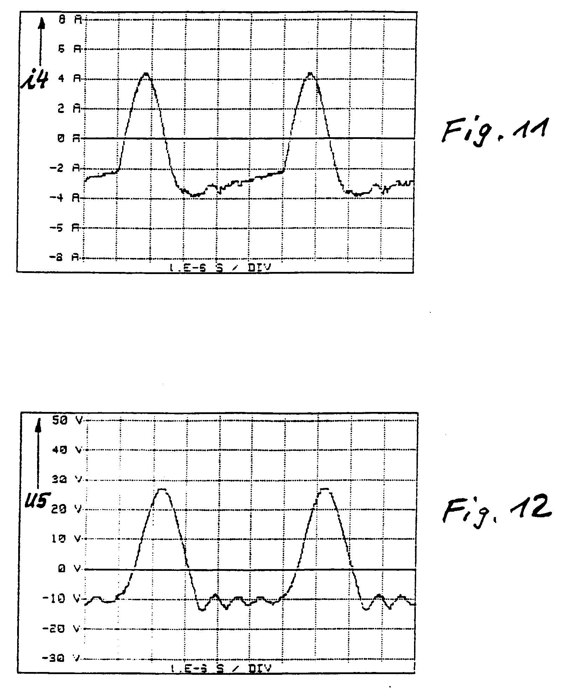

Die übrigen Oszillogramme zeigen die Drainspannung UDrain am Feldeffekttransistor S1 (Figur 9), die Spannung U3 am Ausgang des Gleichrichters D1 (Figur 10), den Strom i4 vom Verbindungspunkt der Induktivitäten L, L' zum Resonanzkondensator CR (Figur 11) und die Spannung US über der Glättungsdrossel L (Figur 12).

Der Regler zur Steuerung des Schaltregler-Stellgliedes S1 besteht aus einem VCO (voltage controlled oscillator), dem die spitzenwertintegrierte laststromproportionale Spannung am Kondensator C1, gegebenenfalls verstärkt über einen Regelverstärker RV, als Steuerspannung zugeführt werden kann. Dem VCO ist ein Monoflop MF nachgeschaltet, das vom Ausgangssignal des VCO getriggert wird. Mit dieser Anordnung wird das Schaltregler-Stellglied S1 mit Einschaltimpulsen konstanter Dauer versorgt. Die Ausschaltdauer des Schaltregler-Stellgliedes S1 ist variabel und von der Ausgangsspannung UA abhängig. Eine hohe Ausgangsspannung UA führt zu einer langen Ausschaltdauer des Schaltregler-Stellgliedes S1 und eine niedrige Ausgangsspannung UA zu einer kurzen Ausschaltdauer.

Die Energieversorgung des Reglers kann für die Zeit während der ein ausreichend hoher Strom i2 durch die Glättungsdrossel L fließt über eine zusätzliche Wicklung W1 auf dem Kern der Glättungsdrossel L erfolgen. Hierzu ist die Wicklung W1 mit einem Gleichrichter D3 und einem Speicherkondensator C2 beschaltet. Beim Anlaufen oder bei Kurzschluß am Ausgang wird die Energieversorgung des Reglers aus der Gleichspannungsquelle QE über einen Hilfsregler HR aufrecht erhalten.

Zur Abmagnetisierung des Transformators Tr ist die Drain-Source Strecke des Feldeffekttransistors S1 mit der Serienschaltung bestehend aus dem Gleichrichter D4 und dem Kondensator C3 beschaltet. Der Verbindungspunkt von Gleichrichter D4 und Kondensator C3 ist über den Widerstand R2 mit der Pluspotential führenden Klemme der Gleichspannungsquelle QE verbunden. Durch diese Beschaltung ist es möglich die Abmagnetisierungsenergie des Transformators Tr auf die Gleichspannungsquelle QE zurückzuspeisen.

Die erfindungsgemäße Ausgestaltung des resonanzbestimmenden induktiven Elements L', nach Figur 2 hat den Vorteil, daß während der Energieübertragungsphase des Gleichspannungswandlers - Stellglied eingeschaltet - ein Teil des Resonanzstromes unverzögert, d.h. ohne Phasendrehung direkt in den ausgangsseitigen Glättungskondensator CG, beziehungsweise zur Last fließen kann. Dies bedeutet, daß der Einfluß der Phasendrehung der Glättungsdrossel erheblich verringert ist. Dies erhöht die Phasenreserve des Regelkreises und verbessert das dynamische Verhalten des Reglers, insbesondere bei Lastsprüngen.
Während der Energieübertragung des Gleichspannungswandlers - Stellglied geschlossen - arbeitet die Glättungsdrossel als Stromwandler und die Streuinduktivität, gebildet durch das resonanzbestimmende induktive Element, bestimmt in Verbindung mit dem kapazitiven resonanzbestimmenden Element die Resonanzfrequenz der Stromhalbwelle. Nach Öffnen des Stellgliedes arbeitet nur noch die Glättungsdrossel.

Die Erfindung ist natürlich auch für einen Gleichspannungswandler ohne galvanische Trennung, bei dem der Transformator Tr entfällt, anwendbar.

## Patentansprüche

1. Gleichspannungswandler vom Typ eines Quasi-Resonanzwandlers, mit einem induktiven und einem kapazitiven resonanzbestimmenden Element (CR, L; L') und einem induktiven und kapazitiven Glättungselement (L, CG), wobei zur Gewinnung eines laststromabhängigen Signals ein Stromwandler (SW) vorgesehen ist, dadurch gekennzeichnet, daß das kapazitive resonanzbestimmende Element (CR) und der ausgangsseitige Glättungskondensator (CG) des Gleichspannungswandlers über die Glättungsdrossel (L) bzw. das induktive resonanzbestimmende Element voneinander entkoppelt sind und daß das kapazitive resonanzbestimmende Element (CR) und der ausgangsseitige Glättungskondensator (CG) an ihrem Fußpunkt miteinander verbunden und gemeinsam über die Primärwicklung (WI) des Stromwandlers (SW) geführt sind.

2. Gleichspannungswandler nach Anspruch 1, dadurch gekennzeichnet, daß der Gleichspannungswandler einen Regler aufweist zur Steuerung des Gleichspannungswandler-Stellgliedes (S1) in Abhängigkeit des an der Sekundärwicklung (WII) des Stromwandlers (SW) abnehmbaren Signals, wobei der Regler derart ausgestaltet ist, daß das Stellglied (S1) mit konstanter Einschaltzeit und variabler Ausschaltzeit in Abhängigkeit des an der Sekundärwicklung (WII) des Stromwandlers (SW) abnehmbaren Signals betreibbar ist.

3. Gleichspannungswandler nach Anspruch 1 oder 2, dadurch gekennzeichnet, daß bei einem Gleichspannungswandler vom Flußwandler-Typ die Serienschaltung, bestehend aus dem kapazitiven resonanzbestimmenden Element (CR) und der Primärwicklung (WII) des Stromwandlers (SW), parallel zur Freilaufdiode (DF) angeordnet ist.

4. Gleichspannungswandler nach einem der Ansprüche 1 bis 3, dadurch gekennzeichnet, daß die ausgangssseitige Glättungsdrossel (L) des Gleichspannungswandlers unterteilt ist und daß der Unterteilungspunkt dieser Glättungsdrossel (L) mit der Kathode der Freilaufdiode (DF) verbunden ist, wobei der Wicklungssinn der Teilwicklungen der Glättungsdrossel (L) so gewählt ist, daß ein Teil des Resonanzstromes während der Energieübertragung des Gleichspannungswandlers durch die Primärwicklung (WI) des Stromwandlers (SW) fließen kann.

5. Gleichspannungswandler nach einem der Ansprüche 1 bis 3, dadurch gekennzeichnet, daß in Serie zur ausgangsseitigen Glättungsdrossel (L) des Gleichspannungswandlers ein zusätzliches induktives resonanzbestimmendes Element (L') vorgesehen ist, welches mit der Glättungsdrossel (L) magnetisch gekoppelt ist, und daß dieses zusätzliche induktive resonanzbestimmende Element (L') bezüglich des Wicklungssinnes seiner Wicklung und des Wicklungssinnes der Wicklung der Glättungsdrossel (L) so angeordnet ist, daß ein Teil des Resonanzstromes während der Energieübertragung des Gleichspannungswandlers durch die Primärwicklung (WI) des Stromwandlers (SW) fließen kann.

## Claims

1. Direct voltage converter of the type of a quasi-resonant converter and with an inductive and a capacitive resonance-determining element (CR, L; L') and an inductive and a capacitive smoothing element (L, CG), wherein a current transformer (SW) is provided for obtaining a signal dependent on load current, characterised thereby, that the capacitive resonance-determining element (CR) and the output end smoothing capacitor (CG) of the direct voltage converter are each decoupled from the other either by way of the smoothing choke (L) or by way of the inductive resonance-determining element and that the capacitive resonance-determining element (CR) and the output end smoothing capacitor (CG) are connected together at their foot point and led together by way of the primary winding (WI) of the current transformer (SW).

2. Direct voltage converter according to claim 1, characterised thereby, that the direct voltage converter displays a regulator for the control of the direct voltage converter setting member (S1) in dependence on the signal derivable at the secondary winding (WII) of the current transformer (SW), wherein the regulator is structured in such a manner that the setting member (S1) is operable with constant on-time and variable off-time in dependence on the signal derivable at the secondary winding (WII) of the current transformer (SW).

3. Direct voltage converter according to claim 1 or 2, characterised thereby, that in the case of a direct voltage converter of the flux-changing type, the series connnection, which consists of the capacitive resonance-determining element (CR) and the primary winding (WI) of the current transformer (SW), is connected in parallel with the freewheel diode (DF).

4. Direct voltage converter according to one of the claims 1 to 3, characterised thereby, that the output end smoothing choke (L) of the direct voltage converter is subdivided and that the subdivision point of this smoothing choke (L) is connected with the cathode of the freewheel diode (DF), wherein the winding sense of the partial windings of the smoothing choke (L) is so chosen that a part of the resonant current can flow through the primary winding (WI) of the current transformer (SW) during the energy transmission of the direct voltage converter.

5. Direct voltage converter according to one of the claims 1 to 3, characterised thereby, that an additional inductive resonance-determining element (L'), which is magnetically coupled with the smoothing choke (L), is provided in series with the output end smoothing choke (L) of the direct voltage converter and that this additional inductive resonance-determining element (L') is so arranged in respect of the winding sense of its winding and the winding sense of the winding of the smoothing choke (L) that a part of the resonant current can flow through the primary winding (WI) of the current transformer (SW) during the energy transmission of the direct voltage converter.

## Revendications

1. Convertisseur continu-continu du type d'un convertisseur quasi-résonant, comprenant un élément inductif et un élément capacitif déterminants pour la résonance (CR, L; L'), de même qu'un élément inductif et un élément capacitif de lissage (L, CG), dans lequel un transformateur d'intensité (SW) est prévu pour l'obtention d'un signal fonction du courant de charge, caractérisé en ce que l'élément capacitif déterminant pour la résonance (CR) et le condensateur de lissage (CG) côté sortie du convertisseur continu-continu sont mutuellement découplés par l'inductance de lissage (L) et l'élément inductif déterminant pour la résonance, et que l'élément capacitif déterminant pour la résonance (CR) et le condensateur de lissage (CG) côté sortie sont reliés entre eux à leur base, d'où part une liaison collective passant par l'enroulement primaire (WI) du transformateur d'intensité (SW).

2. Convertisseur continu-continu selon la revendication 1, caractérisé en ce qu'il comporte un régulateur pour commander le composant de réglage du convertisseur continu-continu (S1) en fonction du signal pouvant être prélevé sur l'enroulement secondaire (WII) du transformateur d'intensité (SW), le régulateur étant réalisé de manière que le composant de réglage (S1) puisse être actionné avec un temps d'enclenchement constant et un temps de coupure variable en fonction du signal pouvant être prélevé sur l'enroulement secondaire (WII) du transformateur d'intensité (SW).

3. Convertisseur continu-continu selon la revendication 1 ou 2, caractérisé en ce que, au cas où il s'agit d'un convertisseur continu-continu du type transformateur de flux, le montage en série formé de l'élément capacitif déterminant pour la résonance (CR) et de l'enroulement primaire (WII) du transformateur d'intensité (SW), est connecté en parallèle avec la diode de roue libre (DF).

4. Convertisseur continu-continu selon une des revendications 1 à 3, caractérisé en ce que l'inductance de lissage (L) côté sortie du convertisseur continu-continu est divisée et que le point de division de cette inductance de lissage (L) est relié à la cathode de la diode de roue libre (DF), le sens de bobinage des enroulements partiels de l'inductance de lissage (L) ayant été choisi de manière qu'une partie du courant de résonance puisse passer, pendant la transmission d'énergie du convertisseur continu-continu, par l'enroulement primaire (WI) du transformateur d'intensité (SW).

5. Convertisseur continu-continu selon une des revendications 1 à 3, caractérisé en ce qu'un élément inductif supplémentaire (L'), déterminant pour la résonance, est prévu en série avec l'inductance de lissage (L) côté sortie du convertisseur continu-continu, élément inductif supplémentaire qui est couplé magnétiquement à l'inductance de lissage (L), et que cet élément inductif supplémentaire (L') est agencé, en ce qui concerne le sens de bobinage de son enroulement par rapport au sens de bobinage de l'enroulement de l'inductance de lissage (L), de manière qu'une partie du courant de résonance puisse passer par l'enroulement primaire (WI) du transformateur d'intensité (SW) pendant la transmission d'énergie du convertisseur continu-continu.
